(19) **Europäisches Patentamt**

**European Patent Office**

**Office européen des brevets**

(11) Veröffentlichungsnummer: **0 567 781 A2**

(12) **EUROPÄISCHE PATENTANMELDUNG**

(21) Anmeldenummer: **93104945.6**

(22) Anmeldetag: **25.03.93**

(51) Int. Cl.5: **H02P 7/74**

(30) Priorität: **30.03.92 DE 4210437**

(43) Veröffentlichungstag der Anmeldung:
**03.11.93 Patentblatt 93/44**

(84) Benannte Vertragsstaaten:
**AT BE CH DE DK ES FR GB GR IT LI NL PT SE**

(71) Anmelder: **Bockwoldt, Carl-Michael, Dipl.-Kfm. Dipl.-Ing.**
**Sieker Landstrasse 121**
**D-22927 Grosshansdorf(DE)**

(72) Erfinder: **Bockwoldt, Carl-Michael, Dipl.-Kfm. Dipl.-Ing.**
**Sieker Landstrasse 121**
**D-22927 Grosshansdorf(DE)**

(74) Vertreter: **Patentanwälte Beetz - Timpe - Siegfried - Schmitt-Fumian- Mayr**
**Steinsdorfstrasse 10**
**D-80538 München (DE)**

(54) **Verfahren und Vorrichtung zum Regeln von Elektromotoren.**

(57) Angegeben wird ein Regelungsverfahren und eine Regelungsvorrichtung, die zwei oder mehrere Motoren (M1 ... Mn) mit definiertem Drehzahlunterschied betreiben kann. Jeweils vorgesehene Sensoren (S1 ... Sn) liefern Impulsfolgen nach Maßgabe des zunehmenden Drehwinkels der Motoren (M1 ... Mn) oder nach Maßgabe einer anderen Größe, die sich aufgrund der jeweiligen Motordrehung ändert. Die einlaufende Impulszahl der überwachten Motoren wird ausgewertet. Nach Maßgabe der Differenz zwischen den Impulszahlen der einzelnen einlaufenden Impulsfolgen werden entsprechende Motoren zeitweilig teilweise oder vollständig vom Netz abgeschaltet.

FIG. 2

EP 0 567 781 A2

Die vorliegende Erfindung bezieht sich auf ein Verfahren und eine Vorrichtung zum Regeln von Elektromotoren gemäß dem Oberbegriff der unabhängigen Ansprüche.

Drehstrommotoren, sog. Kurzschlußläufer, werden in großem Umfang im Maschinenbau eingesetzt. Es handelt sich bei diesen Motoren um äußerst robuste und zudem sehr kostengünstige Antriebseinheiten, die - im Gegensatz zu Gleichstrommotoren - nahezu verschleißfrei arbeiten. Die Drehzahl der Motoren steht in direkter Abhängigkeit zu der Betriebsfrequenz und der Polzahl. Bei den üblicherweise verwendeten Motoren handelt es sich um Asynchronläufer, bei denen die Drehzahl - neben der eben erwähnten Abhängigkeit von der Betriebsfrequenz - sich auch in Relation zu der Belastung ändert. Dieses Verhalten ist in den meisten Betriebsfällen nicht störend.

In einigen Anlagen ist es jedoch erforderlich, daß zwei oder auch mehrere Motoren mit absolut gleicher Drehzahl laufen. Beispiel: zwei Fahrwerksmotoren an gegenüberliegenden Seiten einer Fahrwerksplattform für Krane. Würden hier unterschiedliche Drehzahlen auftreten, wäre eine Geradeausfahrt nicht möglich. Ist das Laufwerk auf Schienen angeordnet, würde sich zudem das Fahrwerk verkanten. In diesen Fällen können dann sog. Synchronmotoren Verwendung finden oder aber durch Einsatz von Frequenzumrichtern und entsprechende Änderung der Betriebsfrequenz sowie der hieraus folgenden Drehzahländerung eines Motors eine Synchronisation der Drehzahl mit der des anderen erfolgen. Beide Lösungen sind sehr teuer im Vergleich zum Einsatz ungeregelter Asynchronmotoren. Eine dritte Alternative besteht im Einsatz einer elektrischen Welle. Hier handelt es sich ebenfalls um eine sehr präzise Steuerung, die jedoch mit erheblichem technischen Aufwand verbunden ist.

Synchronmotoren haben aufgrund der technischen Auslegung die Eigenschaft, im sog. eingerasteten Zustand mit der aus der Betriebsfrequenz errechenbaren theoretischen Drehzahl zu laufen. Sie nutzen die Betriebsfrequenz als Referenz und richten ihre Drehzahl nach dieser aus. Reine Synchronmotoren werden mit Hilfe einer zusätzlichen Antriebsmaschine auf Synchrondrehzahl gebracht und dann an das Netz angeschlossen. Anders geartet sind Reluktanzmotoren. Die Betriebsaufnahme dieses Motors entwickelt sich hierbei über zwei Phasen: unmittelbar nach dem Einschalten läuft der Motor in der Anlaufphase aus dem Stillstand in asynchronen Betrieb bis in die Nähe der Synchrondrehzahl. Das Einrasten auf die Betriebsfrequenz erfolgt in der zweiten Phase ruckartig. Im Arbeitsbereich des Motors wird dieser synchron zur Betriebsfrequenz seine Drehzahl halten. Bei Belastungsänderungen reagiert der Motor durch Änderung des Phasenwinkels. Dieses Verhalten ist am besten mit dem Schwingen einer Drehfeder, wie sie z.B. als Unruh-Feder in Uhren eingebaut ist, zu vergleichen. Wird die Belastung eines Synchronmotors zu groß, so fällt dieser außer Tritt und geht in asynchronen Betrieb.

Frequenzumrichter sind gesteuerte Stromquellen, deren Frequenz frei eingestellt werden kann. Da sich in Abhängigkeit der Frequenz, wie bereits erwähnt, die Drehzahl des Motors ändert, kann auf diese Weise ein Synchronlauf zweier Motoren erzeugt werden. Aufgrund des nicht unerheblichen technischen Aufwands der Betriebsfrequenzänderung in Anbetracht der verwendeten Spannungen und Ströme ist die Lösung kostenintensiv.

Bei der elektrischen Welle handelt es sich um primär- und sekundärseitig parallel oder in Reihe geschaltete Asynchronmaschinen mit Schleifringläufern. In den Verbindungsleitungen der Wellenmaschinen fließt dann ein Strom, wenn sich die Drehzahlen unterscheiden und eine Phasenverschiebung der induzierten Spannungen eintritt. Dieser Strom erzeugt ein Magnetfeld, dieses wiederum ein Drehmoment, das dem Auseinanderdriften der Drehzahlen entgegenwirkt. Beim Anlaufen der Motoren, die durch die elektrische Welle verbunden sind, gibt es keinen asynchronen Zustand, so daß diese Konfiguration einfachen Synchronmotoren überlegen ist. Beim Starten der Maschinen ist es indessen erforderlich, die Maschinen vor Einschalten in die Synchronposition zu bringen, ggf. manuell durch entsprechende Einstellung.

Es gibt aber auch Anwendungen, bei denen ein genau definierter Drehzahlunterschied zwischen zwei Elektromotoren erforderlich ist. Zwei Anwendungsfälle sollen als Beispiele angeführt werden:
Eine Maschine, die Tuchbahnen zum Einfärben durch entsprechende Farbbecken zu führen hat, treibe die zuführende und die gleich dicke abnehmende Walze mit je einem Motor. Der Synchronantrieb mit einer Drehzahldifferenz von "0" ist für den Normalbetrieb erforderlich, da bei Nichteinhaltung dieser Bedingung die Tuchbahnen reißen oder aber ständig zunehmend durchhängen würden. Bei der Einstellung der Maschine könnte jedoch zum definierten Spannen der Tuchbahnen eine kurzzeitige Drehzahldifferenz erzeugt werden, die einen Verdrehwinkel der Motoren erzeugt. Ist die richtige Tuch-Spannung erreicht, so wird der zwischen den Motoren bestehende Winkel eingefroren und die Tuchbahnen bei immerwährend gleicher Spannung weitergefördert. Durch eine kurzzeitige Drehzahldifferenz soll somit ein bestimmter Verdrehwinkel eingestellt werden.

Auf einem Kfz-Prüfstand sollen bei einem Kraftfahrzeug mit Allradantrieb die Bremsleistungen der beiden Bremsen an einer Achse festgestellt werden. Alle Räder sind durch Differentialgetriebe miteinander verbunden. Das Fahrzeug steht mit den Rädern auf Rollen, die durch Drehstrommotoren angetrieben werden. Damit eine Kraftübertragung nicht über die Differentialgetriebe stattfindet, ist es erforderlich, daß die Winkelgeschwindigkeit der beiden angetriebenen Räder absolut gleich ist und die beiden Räder gegenläufig drehen. Die Reifen weisen jedoch infolge Abnutzung, unterschiedlicher Reifendrücke usw. unterschiedliche Durchmesser auf. Die Reifen bilden in Verbindung mit den antreibenden Rollen eine Drehzahlübersetzung, die infolge der Reifenunterschiede geringe Differenzen aufweist. Bei gleicher Drehzahl der Rollen wird demzufolge die Winkelgeschwindigkeit der Räder nicht gleich sein, es findet also ein Kraftausgleich über das Differentialgetriebe statt. Mit reinem Synchronlauf ist dieser Anwendungsfall nicht lösbar. Hier müssen die Motoren mit einer geringfügigen, jedoch unbedingt phasenstarren Drehzahldifferenz arbeiten, die auch bei Belastung den einmal gefundenen Wert einhalten muß.

Der absolute Synchronlauf zweier Elektromotoren kann dabei als Sonderfall der zuletzt beschriebenen Beispiele angesehen werden, beim Sonderfall ist dann der Drehzahlunterschied zwischen den zwei Elektromotoren gleich Null.

Aufgabe der Erfindung ist es, ein Verfahren und eine Vorrichtung zum Regeln von zumindest zwei Elektromotoren anzugeben, womit die Drehzahldifferenz zwischen den Elektromotoren einfach und genau eingestellt werden kann.

Diese Aufgabe wird anspruchsgemäß gelöst.

Im folgenden werden einzelne Ausführungsformen der vorliegenden Erfindung beschrieben. Es zeigen

Fig. 1          ein verallgemeinertes Blockschaltbild der vorliegenden Erfindung;

Fig. 2          ein detaillierteres Blockschaltbild;

Fig. 3 und 4    Schaltbilder einer konkreten Ausführungsform der Erfindung;

Fig. 5          eine Tabelle zur Erläuterung der Wirkungsweise der Schaltung,

Fig. 6A         ein Blockschaltbild zur Regelung mehrerer Motoren nach dem Prinzip einer sukzessiven Regelung,

Fig. 6B         ein Blockschaltbild zur Regelung mehrerer Motoren mittels zyklischer Überwachung,

Fig. 7          ein Blockschaltbild zur Erläuterung einer Impulsmodifikationsschaltung,

Fig. 8          ein Prinzipschaltbild zur Darstellung einer möglichen Anwendungsweise der Modifikationsschaltung nach Fig. 7, und

Fig. 9          ein ausführliches Schaltbild der Modifikationsschaltung nach Fig. 7.

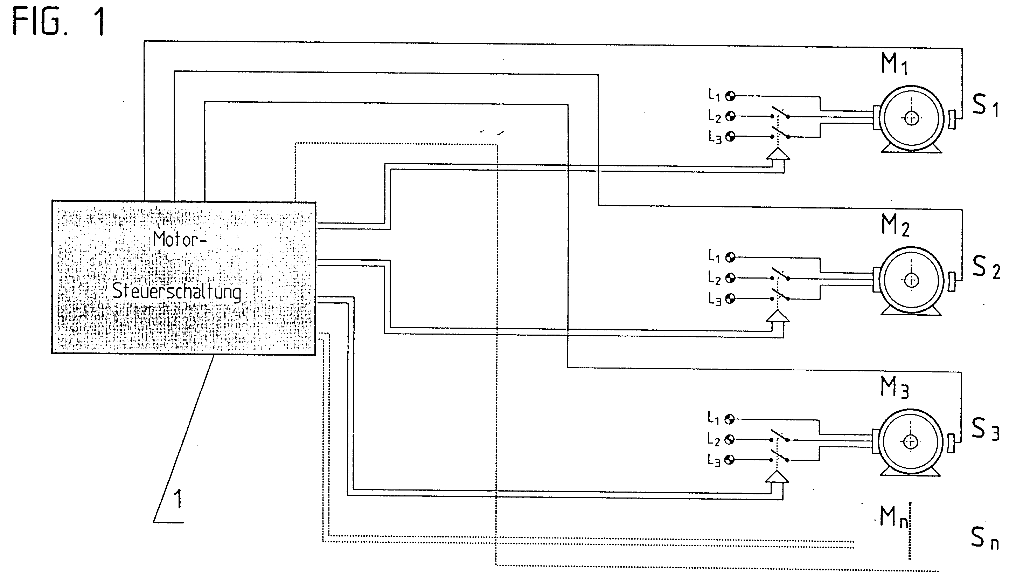

Im folgenden wird nun, bezugnehmend auf die Fig. 1-6, der Sonderfall Drehzahlunterschied gleich Null beschrieben; die Verallgemeinerung hin zu definierten Drehzahlunterschieden erfolgt im Anschluß daran.

Fig. 1 zeigt ein erstes, sehr allgemeines Ausführungsbeispiel der vorliegenden Erfindung. Das System weist mehrere Motoren M1, M2, M3 ... Mn auf. Sie sind jeweils an eine dreiphasige Spannungsversorgung $L_1$, $L_2$, $L_3$ angeschlossen. Jeweils mindestens eine der Phasen jedes Motors kann an- bzw. abgeschaltet werden. In Fig. 1 ist eine weitere Ausführungsform dargestellt, gemäß der jeweils zwei Phasen eines Motors abgeschaltet werden können. An jedem der Motoren ist jeweils ein Sensor S1, S2, S3 ... Sn angebracht. Entsprechend dem fortschreitenden Drehwinkel eines jeden Motors M1 bis Mn gibt jeder der Sensoren S1 bis Sn Impulsfolgen ab. Die Sensoren können beispielsweise magnetische Sensoren sein, die von Zahnscheiben oder Zahnrädern magnetische Signale erfassen und diese in elektrische Signale umwandeln; sie können aber beispielsweise auch optische Detektoren sein. Vorzugsweise geben alle Sensoren S1 bis Sn die gleiche Anzahl von Impulsen pro Umdrehung des Motors ab. Die von den Sensoren stammenden Signale werden einer Steuerung 1 zugeführt. Die Steuerung 1 überwacht die einlaufenden Signale aller angeschlossenen Motoren und ermittelt den langsamsten dieser Motoren. Letzterer kann dadurch erkannt werden, daß er innerhalb einer gewissen. Torzeit die wenigsten Impulse abgibt. Dies basiert auf der Voraussetzung, daß alle Sensoren die gleiche Anzahl von Impulsen pro Umdrehung abgeben. Ist diese Voraussetzung nicht erfüllt, so kann immer noch der langsamste Motor ermittelt werden; die jeweils eingelaufene Impulszahl ist dann aber noch mit Proportionalitätskoeffizienten umzurechnen.

Der langsamste Motor wird dadurch ermittelt, daß untersucht wird, welcher der Motoren in einer gegebenen Torzeit die wenigstens Impulse verursacht hat. Nach Maßgabe des Unterschieds jeweils zwischen dem langsamsten Motor und jedem der schnelleren Motoren werden dann die schnelleren Motoren verlangsamt. Dies geschieht dadurch, daß die Steuerung 1 wahlweise eine Phase oder zwei Phasen der schnelleren Motoren von der Energieversorgung abklemmt. In Fig. 1 wird dies durch die auf die Schalter gerichteten, von der Steuerung 1 kommenden Pfeile symbolisiert. Wird lediglich eine Phase abgeklemmt, so ergibt sich ein schwächerer Verlangsamungseffekt. Werden dagegen beide Phasen abgeklemmt, so ist der gesamte Motor stromlos. Er wird dann vergleichsweise stark abgebremst. Das Abklemmen einer oder mehrerer Phasen vom Versorgungsnetzt erfolgt dabei nur kurzzeitig. Nach einer kurzen Unterbrechung wird die Energiezufuhr wieder aufgenommen, indem die Phase wieder angeklemmt wird. Der Motor wird dann mit voller Kraft weiterbetrieben.

Bei der Festlegung der Abschaltdauer einer oder mehrerer Phasen kann unterschiedlich vorgegangen werden. Einerseits ist es möglich, die Phase bzw. die Phasen einfach eine vorbestimmte Zeitdauer lang vom Netz abzuklemmen. Es ist aber auch möglich, während des abgeklemmten Zustands den Verlauf der Zählerstände der einzelnen einlaufenden Impulsfolgen weiterzuverfolgen und erst dann die entsprechenden Phasen wieder an die Versorgung anzuklemmen, wenn ein Schwellenwert des Zählerstandes unterschritten ist. Die Schwellenwerte für das An- bzw. Abschalten können gleich sein, es kann aber auch ein hystereseartiges Verhalten implementiert sein.

Es ergibt sich somit ein Regelsystem für mehrere Motoren, das den Drehzahlunterschied zwischen den verschiedenen Motoren auf Null regelt. Ein derartiges Regelsystem wird zunächst nicht die absolute Drehzahl der Motoren einstellen, es sorgt nur dafür, daß alle die gleiche Drehzahl haben. Dem System kann aber noch eine Komponente hinzugefügt werden, die die Absolutzahl der einlaufenden Impulse des langsamsten Motors innerhalb einer gewissen Torzeit überwacht. Es ist dann auch möglich, innerhalb gewisser Grenzen die absolute Drehzahl der Motoren genau einzustellen. Selbstverständlich ist es nicht möglich, das System schneller als es durch den langsamsten Motor vorgegeben wird, zu betreiben. Es kann aber langsamer betrieben werden, indem nicht nur die schnelleren Motoren abgebremst werden, sondern auch der langsamste selbst. Die Synchronisierung zwischen den einzelnen Motoren findet dann statt wie weiter oben beschrieben.

Grundsätzlich ist es auch möglich, daß eine der Impulsfolgen nicht durch einen mit einem Motor verbundenen Sensor erzeugt wird. Statt dessen kann sie unmittelbar durch einen Frequenzgenerator erzeugt werden. Die Frequenz der durch den Frequenzgenerator ausgegebenen Impulsfolge kann entweder fest eingestellt sein. Selbstverständlich kann sie aber auch einstellbar vorgesehen sein, so daß in einfacher Weise eine einzustellende Drehzahl geändert werden kann. Die durch den Frequenzgenerator erzeugte Impulsfolge dient somit als Referenzgröße. Die Drehzahl der anderen Motoren wird durch das Regelsystem dann so eingeregelt, daß im Mittel die Impulsfolgefrequenzen der verschiedenen Impulsfolgen gleich sind. Auch hier gilt wieder, daß nur auf eine Drehzahl geregelt werden kann, die kleiner als die Drehzahl des langsamsten Motors ist. Ein zu starkes Abbremsen der Motoren unter ihre Nenndrehzahl ist dabei generell nicht allzu sinnvoll. Einerseits verschlechtert sich der Wirkungsgrad von Motoren außerhalb des üblichen Arbeitspunkts. Andererseits kann das längerzeitige Abklemmen einzelner Phasen vom Netz zu unrundem Lauf der Motoren führen. Werden zum Abklemmen der einzelnen Phasen Nullspannungsschalter verwendet, tritt dieser unrunde Lauf früher auf. Eine Erweiterung des Bereichs, innerhalb dessen ein Motor abgebremst werden kann, kann dadurch erreicht werden, daß anstelle von Nullspannungsschaltern Phasenanschnittssteuerungen verwendet werden.

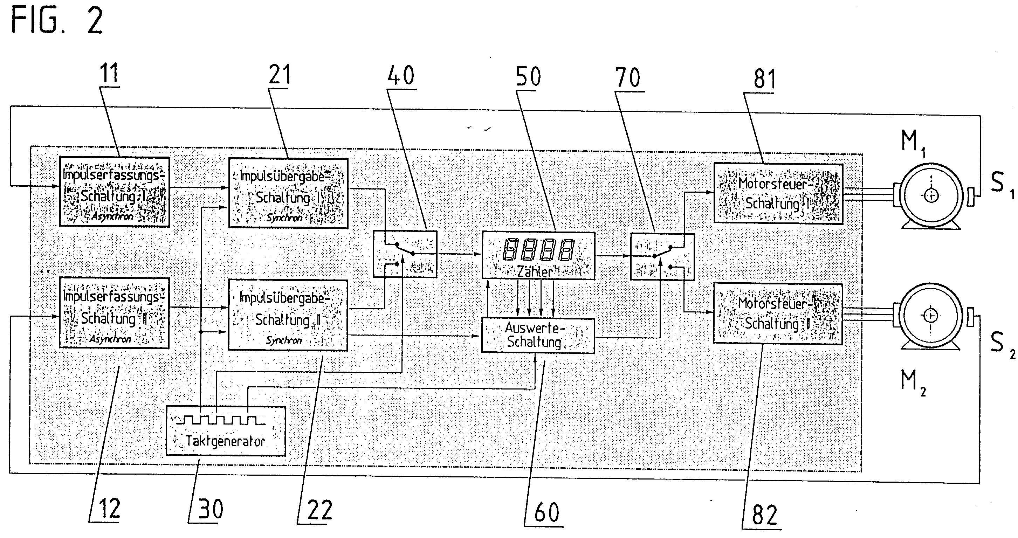

Fig. 2 zeigt ein etwas ausführlicheres Blockschaltbild, bei dem die erfindungsgemäße Motorregelung zur Synchronisierung von zwei Motoren verwendet wird. Dadurch, daß nur zwei Motoren zu synchronisieren sind, ergeben sich Vereinfachungen bei der Signalverarbeitung und Signalauswertung. Die sonst beschriebenen Komponenten können aber auch in Regelsystemen mit mehr als zwei Motoren angewendet werden.

Die in Fig. 2 gezeigten Komponenten 10, 20, 30, 40, 50, 60 und 70 sind Elemente der in Fig. 1 dargestellten Steuerung 1. Auch die Komponenten 80 können innerhalb der Steuerung vorgesehen sein, genausogut können sie aber auch am Motor direkt angebracht sein.

Die Motoren M1, M2 sind mit Sensoren S1, S2 versehen. Diese Sensoren liefern unabhängig voneinander und somit asynchron Impulse entsprechend der sich verändernden Winkelposition der Motoren M1, M2 an jeweils separat vorgesehene Impulserfassungsschaltungen 11, 12. Diese Impulserfassungsschaltungen bewirken, falls notwendig, eine Triggerung, d.h. eine Digitalisierung der einlaufenden Impulse und speichern sie vorläufig. In den Impulserfassungsschaltungen 11, 12 bleiben diese Impulse solange gespeichert, bis sie zeitlich koordiniert durch jeweils vorgesehene Impulsübergabeschaltungen 21, 22 aus den Impulserfassungsschaltungen 11, 12 abgerufen werden. Die Impulsübergabeschaltung 21 ruft dabei den in der Impulserfassungsschaltung 11 gespeicherten Impuls ab, wohingegen die Impulsübergabeschaltung 22 den in der Impulserfassungsschaltung 12 gespeicherten Impuls abruft. Die Impulsübergabeschaltungen 21, 22 arbeiten dabei nicht mehr unsynchronisiert zueinander, stattdessen fragen sie die ihnen jeweils zugeordneten Impulserfassungsschaltungen zeitlich aufeinander abgestimmt ab. Die zeitliche Abstimmung kann beispielsweise so sein, daß die Impulsübergabeschaltungen 21, 22 die jeweils zugeordneten Impulserfassungsschaltungen 11, 12 alternierend abfragen. Der ganze Vorgang wird durch einen Taktgenerator 30 gesteuert. Er liefert ein Taktsignal, dessen Grundfrequenz höher als die höchstmögliche Impulsfolgefrequenz von den Sensoren S1, S2 ist. Vorzugsweise ist die Taktgrundfrequenz 10 bis 15 mal höher als die Maximalfrequenz der Impulsfolgen von den Sensoren.

Das getrennte Empfangen, das Zwischenspeichern sowie die Wahl der Taktfrequenz, wie oben beschrieben, ist notwendig, um jeden einlaufenden Impuls sicher empfangen zu können. Da die Impulsfolgen von den Sensoren S1, S2 unsynchronisiert abgegeben werden, ist es möglich, daß die Sensoren S1, S2 je einen Impuls exakt gleichzeitig abgeben. Damit von diesen gleichzeitig abgegebenen Impulsen keiner verlorengeht, werden sie in den Impulserfassungsschaltungen 11, 12 zwischengespeichert und dann zeitlich synchronisiert, z.B. alternierend, abgerufen. Wenn dann im letzten Abfrageintervall ein Impuls in die Impulserfassungsschaltung 11 bzw. 12 eingelaufen ist, kann dieser zeitlich synchronisiert am Ausgang der Impulsübergabeschaltung 21 bzw. 22 weiter verarbeitet werden.

Im dargestellten Ausführungsbeispiel steuert der Taktgenerator 30 einen Umschalter 40, der die alternierend bereitgestellten Impulse in abwechselnder Weise auf eine Zählschaltung 50, 60 gibt.

Für die Zählschaltung 50, 60 sind verschiedene Ausführungsformen denkbar. In Fig. 2 ist eine Ausführungsform dargestellt, bei der nach Betrag und Vorzeichen gezählt wird. Die Zählrichtung wird dabei durch eine in der Zählschaltung 50, 60 enthaltene Auswerteschaltung 60 bestimmt. Letztere empfängt sowohl die Signale von den Impulsübergabeschaltungen als auch den durch den Taktgenerator 30 erzeugten Takt. Der Zähler 50 empfängt somit über den Umschalter 40 alternierend die Impulse von den Impulsübergabeschaltungen 21, 22. Außerdem wird durch die Auswerteschaltung 60 die Zählrichtung bestimmt. Die Auswerteschaltung 60 erzeugt neben dem Signal, das die Zählrichtung angibt, außerdem ein weiteres Signal, das angibt, welcher der beiden Motoren M1, M2 der schnellere ist. Dieses Signal wird einem weiteren Umschalter 70 zugeführt. Der Zähler 50 andererseits gibt durch seinen Zählerstand wider, wie weit die beiden Motoren auseinandergelaufen sind. Der Zählerstand ist somit ein direktes Maß für den Unterschied in der Winkelposition der beiden Motoren. In Abhängigkeit vom. Betrag des Zählerstands können nun geeignete Maßnahmen zum Abbremsen des schnelleren Motors ergriffen werden. Welcher Motor abzubremsen ist, wird durch den weiteren Umschalter 70 nach Maßgabe des durch die Auswerteschaltung 60 erzeugten Signals bestimmt. Jedem Motor M1, M2 ist eine entsprechende Motorsteuerschaltung 81, 82 vorgeschaltet, die das geeignete Anklemmen und Abklemmen der Phasen vom Netz steuert. Die Motorsteuerschaltungen 81, 82 empfangen die Signale vom Zähler 50 entsprechend der Schalterstellung des weiteren Umschalters 70.

Nach Maßgabe dieser Signale klemmen sie entweder keine, eine oder zwei Phasen des betreffenden Motors vom Netz ab, so daß dieser langsamer läuft.

Die konkrete Ausgestaltung kann beispielsweise so aussehen, daß ein Zählerstand von "1" toleriert wird. Dies sollte sogar so sein, da aufgrund der alternierenden Impulsverarbeitung der Zähler fortwährend zwischen 0 und 1 hin- und hergeschaltet wird. Ließe man keine Toleranz zu, würde dies zu fortwährenden unnötigen Schaltvorgängen führen. Ein Zählerstand von "2" könnte als Signal zum Abschalten einer Phase des entsprechenden Motors verstanden werden und ein Zählerstand von "4" zum Abschalten zweier Phasen des betreffenden Motors. Gelegentlich kann es auch vorkommen, daß einer der Motoren blockiert ist. Dann wird der Zählerstand des Zählers 50 rapide anwachsen, so daß beispielsweise ein Zählerstand von "8" als Bedingung zum Auslösen eines Alarms verwendet werden kann. Die genannten Zählerwerte von "2", "4" und "8" bieten Vorteile, wenn, wie meistens üblich, zum Zählen ein Digitalbaustein verwendet wird. Es genügt dann ein 4-Bit-Zähler, und um geeignete Maßnahmen auszulösen, müssen lediglich die drei höherwertigen Bits jeweils separat für sich überwacht werden. Selbstverständlich ist es aber auch möglich, anders gestaffelte Grenzwerte vorzusehen. Die Ansprechzeit der Schaltung kann durch die Anzahl von Sensorimpulsen pro Umdrehung sowie durch die wählbare Toleranzgrenze eingestellt werden.

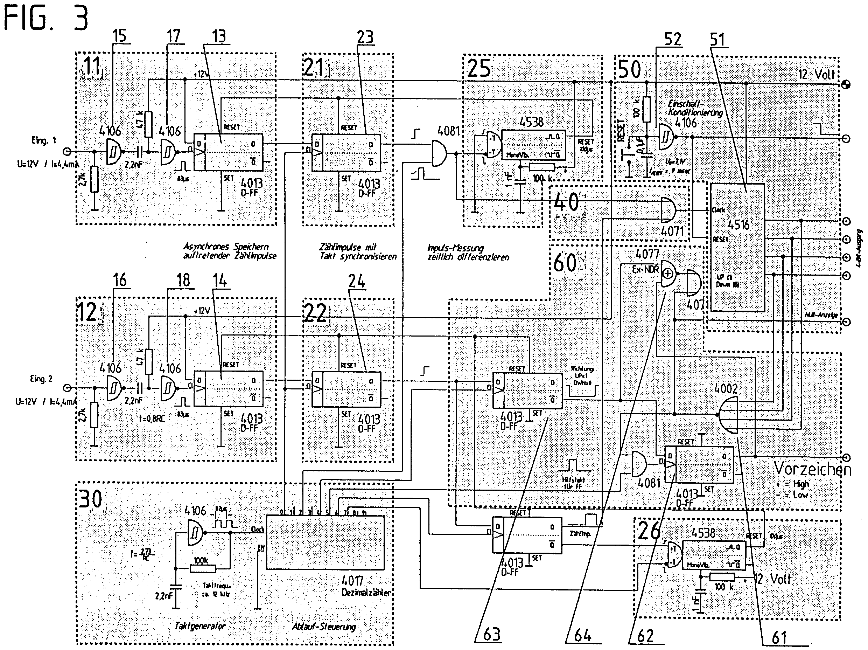

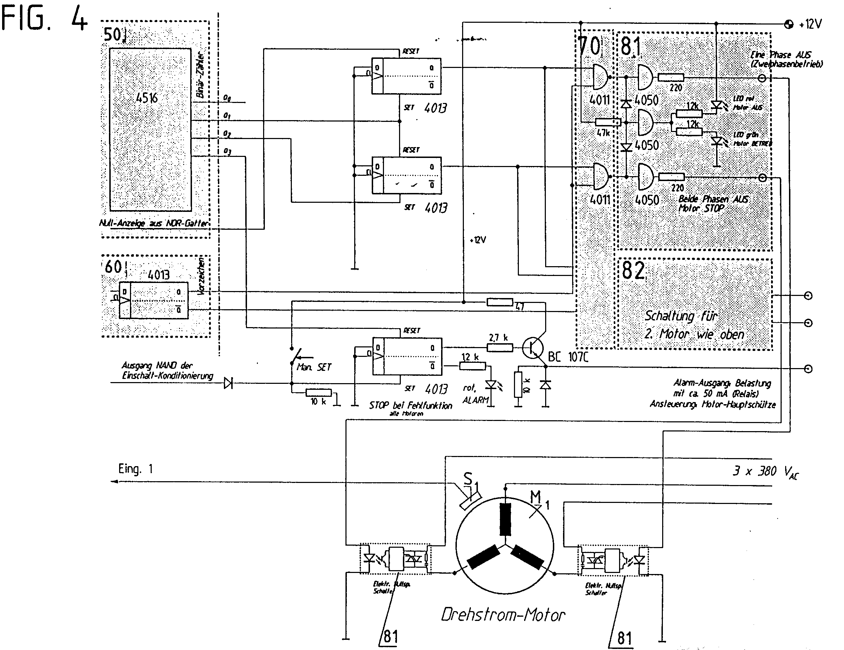

Fig. 3 und 4 zeigen ein Schaltbild einer konkreten Ausführungsform der vorliegenden Erfindung. Sie entspricht im wesentlichen dem Blockdiagramm von Fig. 2. Fig. 3 zeigt die Komponenten 11-60, Fig. 4 die Komponenten 50-82. Der Taktgenerator 30 erzeugt einen Takt von etwa 10 kHz und steuert damit einen Dezimalzähler an, der seine Ausgänge 0 bis 9 zyklisch durchschaltet. Die Dezimalausgänge 0 bis 9 können also zur zeitlichen Synchronisierung der einzelnen Vorgänge verwendet werden. Die D-Flip-Flops 13 bzw. 14 bilden, jeweils zusammen mit weiteren Bauelementen, die Impulserfassungsschaltungen 11, 12. Die D-Flip-Flops 23, 24 bilden jeweils die Impulsübergabeschaltungen, das Gatter 40 kann mit dem Umschalter 40 in Fig. 2 gleichgesetzt werden. Der Zähler 50 besteht aus den Zählbausteinen 51 und der Einschaltkonditionierung 52. Die Auswerteschaltung 60 besteht im wesentlichen aus den Baugruppen 61, 62, 63 und 64. In Fig. 4 ist lediglich die Motorsteuerschaltung 81 dargestellt. Die den Schaltungen 81 bzw. 82 vorgelagerten Gatter bilden den weiteren Umschalter 70. Die sich daran anschließenden Bauelemente bilden zusammen mit den am Motor vorgesehenen Elektrischen Nullspannungsschaltern die eigentliche Motorsteuerschaltung.

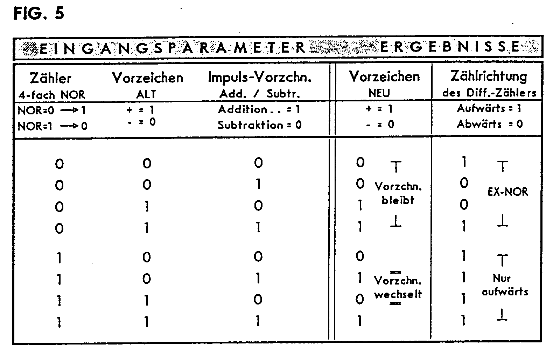

Im folgenden wird die Betriebsweise der Schaltung bezugnehmend auch auf Fig. 5 kurz erläutert.

Der Zähler besteht aus zwei getrennt und simultan arbeitenden Zählkanälen, die jeweils mit einem Schmidt-Trigger am Eingang und zwei nachfolgenden Speicherbausteinen bestückt sind.

Der erste Schmidt-Trigger 15, 16 eines jeden Kanals dient lediglich zur Formung steiler Schaltflanken bzw. kann auch zur Entprellung von Kontakten verwendet werden. Der darauffolgende Triggerbaustein 17, 18 ist als Halbmonovibrator geschaltet und generiert aus der positiven Flanke des Eingangspulses einen breiten Impuls.

Der Impuls wird dem Takteingang des nachfolgend geschalteten D-Flip-Flops 13, 14 zugeführt. Da der D-Eingang des FF auf logisch "1" liegt, wird das D-FF bei Auftreten der positiven Flanke des Impulses gesetzt, d.h. der Ausgang "Q" nimmt den Wert "1" an. Wichtig ist hierbei, daß das D-FF asynchron gesetzt wird, d.h., sobald eine positive Flanke auftritt, wird dies erkannt.

Das nachgeschaltete D-FF 23, 24 wird durch den Taktgenerator 30- hier der Ausgang "0" - über den Takteingang angesteuert. Es übernimmt also taktsynchron die aufgetretenen Informationen und stellt sie der nachfolgenden Logik entsprechend zur Verfügung. Das bedeutet, daß das Auftreten der asynchronen Eingangspulse auf beiden Kanälen, die simultan erfaßt werden, nunmehr einem sukzessiven Meßvorgang zugeführt werden können. Dies ist erforderlich, da die an den beiden Eingängen auftretenden Pulse zu einem bestimmten Zeitpunkt absolut gleichzeitig erscheinen können. In diesem Falle würde bei simultaner Messung entweder durch Nichtbeachtung eines Impulses oder aber durch Zählen in unkontrollierter Richtung ein Meßfehler auftreten.

Die D-Flip-Flops 23, 24 halten die zu irgendeiner Zeit aufgetretenen Informationen so lange bereit, bis sie abgerufen wurden. Nach Abruf und Zuführung zum Zähler werden mit den beiden Monovibratoren 25, 26 ca. 100 μsec breite Reset-Impulse gebildet, die die Schaltung für eine neue Messung vorbereiten. Zu beachten ist hierbei, daß nur der Zählzweig einen Reset-Impuls bildet, der zuvor einen Zählimpuls geliefert hat. Ein gemeinsamer Reset-Impuls für beide Zweige gleichzeitig ist nicht möglich. Dieses würde vielmehr den Verlust von Impulsen in dem nicht den RESET auslösenden Meßzweig bedeuten können, da diese eventuell zur Zählung noch nicht erfaßt wurden.

Die beiden Zählimpulse werden über ein ODER-Gatter verknüpft und dem Zählerbaustein 51 zugewiesen. Hierbei ist der "Eingang 1" als addierender und der "Eingang 2" als subtrahierender Meßweg definiert. Die Erkennung, in welcher Richtung zu zählen ist, wird über den subtrahierenden Zweig vorgenommen. Dies geschieht unter Zuhilfenahme von zwei weiteren D-Flip-Flops 62, 63. Diese sind infolge des Taktgenerators 30 zeitlich verschieden geschaltet. So wird die Flanke und der "1"-Zustand des die Richtung (aufwärts/abwärts) markierenden D-FFs 63 zwei Taktbreiten vor dem erzeugten Zählimpuls generiert, um den Zähler 50 entsprechend rechtzeitig auf UP und DOWN umzuschalten.

Der Zähler 50 selbst unterliegt einem besonderen Zählprotokoll insofern, als dieser beim Abwärtszählen niemals unter "0" schreiten darf. Würde der Zähler aus der "0"-Position rückwärts zählen, würde die nächste Anzeige im Dual-Code 1111 sein, d.h. dezimal = 15. Dies bedeutet einen Wertesprung in Höhe von 15 und wäre für den Zweck der Auswertung unbrauchbar. Daher sorgt eine spezielle logische Verknüpfung dafür, daß der Zähler ab Zählstand "0000" immer aufwärts zählt, ganz gleich, ob ein subtrahierender oder addierender Impuls Anlaß war. Die Auswerteverknüpfung weist jedoch bei Auftreten eines subtrahierenden Impulses mit Hilfe eines weiteren D-FFs ein negatives Vorzeichen aus. Dieses wird zur Entscheidung verwendet, in welcher Richtung eine Steuerung zu erfolgen hat.

Die Auswerteverknüpfung besteht aus NOR-Gattern, ODER-, AND und EX-NOR-Gattern. Sie gehorcht der in Fig. 5 wiedergegebenen Wahrheitstabelle. Das Vierfach-NOR-Gatter überwacht die vier Ausgänge des 4-Bit-Zählers. Genau bei dem Zählstand "0000" geht der Ausgang des Gatters auf logisch "1". Hierdurch wird die Nullstellung des Zählers erkannt, die durch die Vorzeichenlogik überwacht wird. Aus der Nullstellung kann der Zähler nur aufwärts zählen. Der Zähler zählt gemäß der bekannten Wertetabelle eines Dualzählers.

Das An- und Abschalten der verschiedenen Phasen kann auf unterschiedliche Weise erfolgen. Zunächst wird eine Ausführungsform beschrieben, bei der lediglich Nullspannungsschalter verwendet werden.

Der Ausgang $2^1$ wird auf einen bistabilen Multivibrator (Flip-Flop) geschaltet. Bei Erreichen genau dieses Zustandes wird dieses auf "1" gesetzt und die nachfolgende Motorkontrolle, bestehend aus Gattern und Treiberstufe, angesteuert. Der angeschlossene Nullspannungsschalter wird auf "LOW" geschaltet. Dieser wird folglich ab dem nächsten Nulldurchgang der den Motor speisenden Spannungsquelle abgeschaltet. Der Motor steht also im Zweiphasenbetrieb und erbringt infolgedessen geringere Leistung. Hierdurch sinkt seine Drehzahl. Sobald der Differenzzähler den Zählzustand "0" erreicht hat, wird das Flip-Flop zurückgesetzt und damit der Zweiphasenbetrieb beendet. Der Ausgang $2^2$ wird einem weiteren Flip-Flop zugeführt. Dieser Zählzustand "4" führt in gleicher Weise, wie oben beschrieben, zum Abschalten, hier nunmehr vom zweiten Nullspannungsschalter. Da zwei Phasen des Motors stromlos sind, ist der Motor abgeschaltet. Dieser Zustand wird, wie zuvor beschrieben, bei Zählerstand "0" beendet.

Beim Abschalten der einzelnen Phasen ist es aber auch möglich, Nullspannungsschalter und Phasenanschnittssteuerungen kombiniert vorzusehen. Verwendet man Phasenanschnitts-Steuerungen, können die Übergänge zwischen dreiphasigem Betrieb, zweiphasigem Betrieb und stromlosen Betrieb sanfter durchgeführt werden. Phasenanschnittsschaltungen können beim Übergang zwischen dem dreiphasigen und dem zweiphasigen Betrieb und/oder beim Übergang zwischen dem zweiphasigen Betrieb und dem stromlosen Betrieb vorgesehen sein. Die Phasenanschnittssteuerungen können beim Zuschalten und/oder beim Abschalten der betreffenden Phase aktiv werden. Soll beispielsweise der Übergang zwischen Zweiphasenbetrieb und stromlosem Betrieb weicher gesteuert werden, so kann beispielsweise der Ausgang $2^2$ des Digitalzählers einem weiteren Flip-Flop zugeführt werden. Dieser Zählzustand führt, wie schon oben beschrieben, zum Abschalten eines zweiten Nullspannungsschalters. Da der Motor nunmehr stromlos ist, fällt die Drehzahl stark ab. Dieser stromlose Zustand wird dann in Abhängigkeit vom Zählerstand derart beendet, daß eine zweite Phase über eine Phasenanschnittssteuerung dem Motor wieder zugeführt wird. Um unnötige Schaltvorgänge zu vermeiden kann außerdem hinsichtlich des Zählerstands eine Art Hysterese eingebaut werden. Die zweite Phase wird beispielsweise beim Zählerstand $2^2$ abgeschaltet und erst beim Zählerstand $2^1$ wieder zugeschaltet. Bei geeigneter Wahl der Zählerstände bzw. bei feinerer Auffächerung derselben kann mit der ersten abzuschaltenden Phase genauso verfahren werden.

Im Vergleich zu der in bezug auf Fig. 1 beschriebenen Ausführungsform ergeben sich bei der Regelung von lediglich zwei Motoren dadurch Vorteile, daß nur ein Zähler verwendet werden muß, der in geeigneter Weise auf Rückwärts- bzw. Vorwärtszählen umzuschalten ist. Das Auswählen des langsamsten Motors entspricht somit lediglich der Vorzeichenentscheidung durch die Auswerteschaltung 60; die Torzeit ist so kurz wie möglich, sie entspricht nämlich dem Impulsabstand der einlaufenden Impulse.

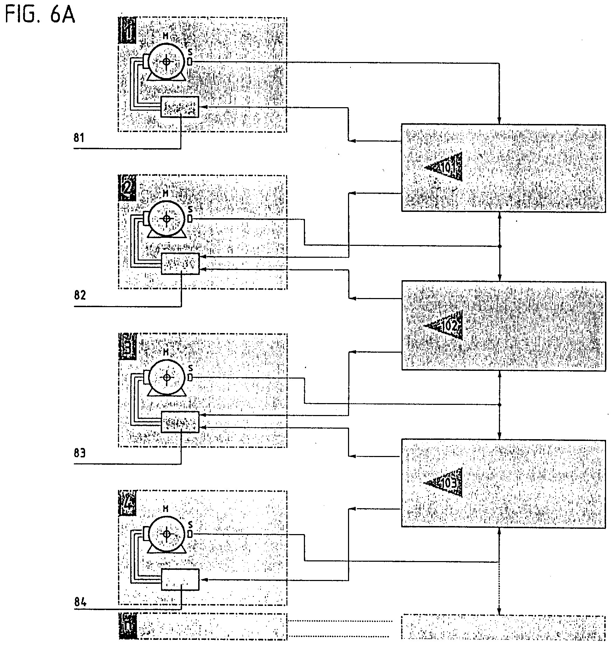

Fig. 6A zeigt eine Ausführungsform, bei der ein System von drei und mehr Motoren durch mehrere Schaltungen gemäß den Fig. 2-4 in einer Reihenschaltung geeignet geregelt werden kann. Dargestellt sind fünf Motoren M1 bis M5 mit je einer Motorsteuerschaltung 81-85. Zwischen den Motoren M1 und M2, M2 und M3, M3 und M4, M4 und M5 ist jeweils eine Schaltung 101-104 angebracht. Diese Schaltungen entsprechen jeweils den Komponenten 11, 12, 21, 22, 30, 40, 50, 60, 70 in Fig. 2. Einige der Sensoren - S2, S3 und S4 - liefern ihre Signale an je zwei Schaltungen. Der langsamste Motor, beispielsweise M4, wird dann über die Schaltungen 103 und 104 seine benachbarten Motoren M3 und M5 abbremsen, die Drehzahlabnahme von M3 wirkt sich über Schaltung 102 auf die Drehzahl von M2 aus, und diese wiederum über Schaltung 101 auf die Drehzahl von M1. Es ist auch möglich, zwischen M5 und M1 direkt eine weitere Schaltung vorzusehen. Die einzelnen Schaltungen sind dann kreisförmig verschaltet. Dies führt zu einer schnelleren Ansprechzeit, kann aber regelungstechnische Probleme aufwerfen.

In der zuletzt beschriebenen Ausführungsform empfangen somit einige der Motorsteuerschaltungen, im konkreten Beispiel die Schaltungen 82 bis 84, Ansteuersignale jeweils von zwei Regelschaltungen, beispielsweise die Motorsteuerschaltung 82 von den Regelschaltungen 101 und 102. Nimmt man beispielsweise an, daß Motor M2 der schnellste aller Motoren sei, so werden die Regelschaltungen 101 und 102 unabhängig voneinander zu dem Ergebnis kommen, daß dieser Motor abzubremsen ist. Sowohl die Regelschaltung 101 als auch die Regelschaltung 102 wird somit entsprechende Steuersignale an die Motorsteuerschaltung 82 schicken. Konkret werden beide Regelungsschaltungen 101 und 102, abhängig vom jeweiligen Zählerstand, eine oder zwei Phasen des Motors M2 von der Versorgungsspannung abklemmen. Der gleichzeitige Zugriff zweier Regelungsschaltungen auf eine Motorsteuerschaltung kann im einfachsten Fall durch ein ODER-Gatter kombiniert werden, falls dies zu Schwierigkeiten führt, kann aber auch die Motorsteuerschaltung so ausgelegt werden, daß nur dasjenige Steuersignal zum Tragen kommt, das aufgrund des langsameren der beiden Nachbarn erzeugt wird. Sie kann dann so ausgelegt werden, daß sie zu einer eindeutigen Entscheidung hinsichtlich der Verwendung ausschließlich eines der beiden angebotenen Steuersignale in der Lage ist.

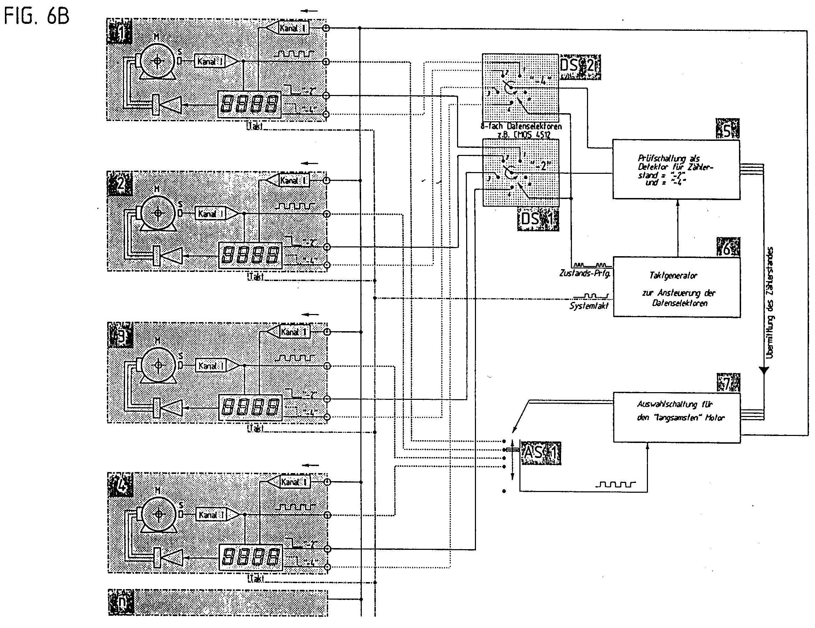

Fig. 6B zeigt eine andere Ausführungsform, gemäß der mehr als zwei Motoren auf zunächst gleiche Drehzahl geregelt werden können.

In Fig. 6B sind mehrere Einheiten 1 - 4, n dargestellt, die jeweils einen Motor M, einen Sensor S, die vorher ausführlich beschriebene Zählschaltung für zwei Impulsfolgen sowie die entsprechende Motorsteuerschaltung aufweisen. Innerhalb jeder der Einheiten 1 - 4, n werden zwei Impulsfolgen miteinander verglichen. Die erste Impulsfolge wird nach Maßgabe der Drehung des zugehörigen Motors M erzeugt und in die entsprechende Zählschaltung über Kanal I eingegeben. Die andere Impulsfolge wird der jeweiligen Zähl-Schaltung über Kanal II von außen zugeführt. Alle Einheiten 1 - 4, n bekommen dabei die gleiche Impulsfolge über Kanal II zugeführt. Die von außen zugeführt Impulsfolge wird durch eine Schaltung bestehend aus den Elementen AS1, DS1, DS2, 5 - 7 erzeugt bzw. ausgewählt. Im einzelnen wird dabei so vorgegangen, daß dem Auswahlschalter AS1 alle durch die Sensoren S der jeweiligen Einheiten 1 - 4, n erzeugten Impulsfolgen als Eingangsgrößen zugeführt werden. Die niederfrequenteste der zugeführten Impulsfolgen wird durch Auswahlschalter AS1 durchgeschaltet und allen Einheiten 1 - 4, n als die von außen anliegende Impulsfolge zugeführt. Somit wird paarweise jeder Motor mit der langsamsten Impulsfolge verglichen und auf diesen langsamsten Wert geregelt.

Die Auswahl der langsamsten bzw. niederfrequentesten Impulsfolge wird möglich durch eine Modifikation innerhalb jeder der Einheiten 1 - 4, n sowie durch die Datenselektoren DS1, DS2 sowie die Schaltungen 5 und 6. Die einzelnen Einheiten 1 - 4, n werden dahingehend modifiziert, daß die nun nicht mehr zum

EP 0 567 781 A2

Abbremsen eines zweiten Motors verwendeten Datensignale bzw. Datenleitungen als Informationssignale bzw. -leitungen über den Zustand der jeweiligen Einheit verwendet werden. Kurz nochmals bezugnehmend auf Fig. 4 erkennt man angedeutet durch Bezugszeichen 83 die beiden Signalleitungen, die zum Abschalten einer oder zweier Phasen des Drehstrommotos führen. Parallel hierzu sind Signalleitungen zum Abbremsen eines zweiten Motors vorgesehen. Dieses sind durch Bezugsziffer 84 bezeichnet. Normalerweise führen sie ebenso zu einem Motor wie die Signalleitungen 83. Bei der Ausführungsform gemäß 6B ist jedoch jeweils nur ein Motor an eine entsprechende Regelschaltung angeschlossen. Ein zweiter Motor, der durch die gleiche Schaltung abzubremsen wäre, existiert nicht. Jedoch werden die entsprechenden Signale 84 als Signal dafür verwendet, daß der durch die jeweilige Regelungsschaltung angesteuerte Motor nun nicht mehr der schnellere ist, sondern daß er langsamer ist als die von außen zugeführte Impulsfolge. Man erkennt in Fig. 6B, daß in jeder der Einheiten jeweils ein Motor gegebenenfalls heruntergebremst werden kann, daß jedoch die Signale, die das Herunterbremsen des anderen, jedoch nicht vorhandenen Motors bewirken sollten, nach außen geführt werden. Diese Signale sind jeweils durch "-2" für eine abzuklemmende Phase bzw. durch "-4" für zwei abzuklemmende Phasen bezeichnet. In der Ausführungsform nach Fig. 6B werden nun diese Signale aller Einheiten 1 - 4, n durch eine Schaltung überwacht. Diejenige Einheit, die als erstes ein Signal ausgibt, das ein Herunterbremsen des anderen, jedoch im vorliegenden Ausführungsbeispiel nicht vorhandenen Motors bewirken sollte, wird als die langsamste Schaltung erkannt, und deren Impulsfolge wird nunmehr als langsamste Impulsfolge durch Auswahlschalter AS1 dem Kanal II aller Einheiten zugeführt. Im einzelnen wird dabei so vorgegangen, daß die "-2"-Signale aller Einheiten 1 - 4, n auf einen Datenselektor DS1 gegeben werden, die "-4"-Signale auf einen Datenselektor DS2. Über eine Prüfschaltung 5 werden seriell und zyklisch alle diese Signalleitungen abgefragt, so daß diejenige Einheit, die als erstes ein Signal, das zum Abschalten einer Phase oder gar zum Abschalten zweier Phasen führen würde, erkannt wird, so daß diese Einheit nunmehr als Referenzeinheit bzw. Referenzmotor ausgewählt wird. Das zugehörige erzeugte Signal wird dann als Referenzsignal allen Einheiten zugeführt. Die Referenzeinheit erhält über "ihren" Kanal II somit auch die von ihr selbst erzeugte Impulsfolge. Der zugehörige Differenzzähler kann sich somit zunächst nicht mehr aus dem Zustand lösen, der das Abschlaten einer Phase oder gar zweier Phasen bewirken würde. Dies ist auch richtig, solange nämlich der Referenzmotor der langsamste ist - beispielsweise aufgrund mechanischer Belastung - muß er als Referenz für die anderen Motoren dienen. Wird er schneller, so wird dies erst dann erkennbar, wenn ein anderer Motor das Abschalten einer oder zweier Phasen meldet. In diesem Augenblick muß der Referenzmotor gewechselt werden.

Hierbei wird die Überwachungsschaltung den ersten Motor der "eine Phase abschalten" meldet, auswählen. Sollten weitere Motoren ebenfalls "eine Phase abschalten" melden, so werden diese zunächst nicht berücksichtigt. Erst bei der nächsten Prüfung, die ja abwechselnd mit der Messung der Motorendrehzahl vorgenommen wird, kann ein anderer Motor, dessen Zustandsmeldung ebenfalls "eine Phase abschalten" lautet, als Referenz gewählt werden. Sollte der erste Motor ebenfalls noch "zwei Phasen abschalten" melden, so wird dieser von der Auswahlschaltung dennoch nicht angewählt. Diese Entscheidung ist infolge der bekannten Adresse des bisherigen Referenzmotors ohne weiteres möglich.

Sobald der Zustand "zwei Phasen abschalten" in einer der Einheiten 1 - 4, n auftritt, erfolgt eine sofortige Umschaltung auf den entsprechenden Motor. Wird auch der Zustand "zwei Phasen abschalten" bei einem Motor überschritten, so muß dieses durch eine separate Überwachung als unzulässig gemeldet werden, wobei diese Meldung besondere Maßnahmen (üblicherweise vollständiges Abschalten aller Motoren) nach sich ziehen wird.

Bei der Ausgestaltung der konkreten Schaltung ist der Taktgenerator 6 als Frequenznormal für alle Steuerschaltungen festzusetzen. Dieser wird hierbei so geschaltet, daß die Taktfrequenz für die Motorenüberwachung z.B. ca. 10 kHz beträgt, während hingegen die Frequenz zur Abprüfung der Zustandsmeldungen der Differenzzähler weitaus höher liegen sollte wie z.B. bei ca. 500 kHz bis 1 MHz. Eine Umschaltung der beiden Frequenzen erfolgt zyklisch, so daß die Bestimmung der augenblicklichen Motorendrehzahl und die Überwachung aller Zustände wechselseitig erfolgen. Während diese höhere Frequenz zur Zustandsprüfung erzeugt wird, ist also die Taktfrequenz der Motorenkontrolle abgeschaltet und umgekehrt. So ist sichergestellt, daß sich bei der Prüfung die Zählerzustände der Motorenkontrolle nicht ändern und die Zustandsprüfung somit "taktsynchron" erfolgt. Infolge der zu den Frequenzen der Drehzahlüberwachungen vergleichsweise sehr hohen Taktfrequenz bringt die Zustandsüberwachung keinen Datenverlust. Alle Prüfungen sind in jedem Fall abgeschlossen, bevor der nächste Sensorimpuls eintrifft.

Überlegungen, wieviele Motoren nach diesem Prinzip zusammenschaltbar wären, ergeben folgenden Rechengang: Die Impulsfolge der Drehzahlgeber betrage ca. 100 Hz, dies entspricht einem Impulsabstand von ca. 10 msec. Der Taktgenerator arbeite mit ca. 10 kHz, er benötigt zum vollständigen Durchlauf als Dezimalzähler 10 Perioden. Dies ergibt also eine Frequenz von 1 kHz und entspricht einem Impulsabstand von 1 msec.

8

In einer Millisekunde hat die Schaltung die Erfassung und Verarbeitung der Drehzahlbestimmung durchgeführt. Bis zum nächsten Impuls stehen also noch ca. 9 msec zur Verfügung. Würden die Datenselektoren mit der soeben erwähnten und durchaus üblichen Taktfrequenz von 1 MHz (dies entspricht einer Impulsfolge von 1 $\mu$sec) geschaltet, so würden in einer weiteren Millisekunde ca. 1000 Überprüfungen durchgeführt werden können. Ein Anschluß von - sicher nur theoretisch denkbaren - ca. 1000 Motoren und mehr wäre hiernach möglich.

Somit werden erfindungsgemäß mehrere Motoren dadurch geregelt, daß für jeden Motor ein Impulsfolge erzeugt wird, daß aus allen Impulsfolgen die niederfrequenteste ausgewählt wird, daß diese niederfrequenteste Impulsfolge allen Motoren bzw. deren Regelungsschaltungen als Referenz zugeführt wird und daß dementsprechend die jeweils schnelleren Motoren abgebremst werden. Der besondere Vorteil dieses Schaltungs- und Überwachungskonzepts liegt in der sehr schnellen Ermittlung des momentan langsamsten Motors als Referenz für das Gesamtsystem.

Nun abermals bezugnehmend auf Fig. 2 wird im folgenden ein Beispiel zur Auslegung der verschiedenen Parameter der Schaltung angegeben.

Es sollen 4 Impulse pro Motorumdrehung erfaßt werden. Bei einem vierpoligen Drehstrommotor bei einer Betriebsfrequenz von 50 Hz und somit einer Nenndrehzahl von 1450 $min^{-1}$ ergibt sich:

Impulsanzahl:     Impulse/min = 1450 $min^{-1}$ * 4 = 5800

Frequenz:     f(Hz) = 5800 Imp/min : 60 sec = 96,7 Hz

Periodenzeit:

$$t = 1/f = \frac{1}{96,7 \ Hz} = 10,3 \ msec.$$

In den ca. 10 msec dreht sich ein vierpoliger Drehstrommotor bei 50 Hz Betriebsfrequenz:

$$Umdrehungen = \frac{1450 \ min}{60 \ sec} * 0,01 \ sec = 0,242 \ min^{-1}$$

Dies entspricht einem Winkel von:

Winkel = 0,242 $min^{-1}$ * 360° = 87°

Taktfrequenz: ca. 12 kHz.

Der Fig. 4 kann entnommen werden, daß der Binärzählerstand "2" zum Abschalten einer Phase des Drehstrommotors führt, wohingegen der Zählerstand "4" zur Abschaltung zweier Phasen und somit zum stromlosen Zustand des Drehstrommotors führt. Das höchstwertige Bit "8" wird als Alarmausgang überwacht.

An dieser Stelle sei noch darauf hingewiesen, daß die oben beschriebene Vorrichtung unabhängig vom Drehsinn der Motoren wirkt. Es werden lediglich die Anzahl der einlaufenden Impulse überwacht bzw. gezählt, die Unterscheidung, ob die Impulse von einem linkslaufenden oder rechtslaufenden Motor stammen, ist dabei nicht relevant. Üblicherweise geben nämlich die Sensoren Impulse drehrichtungsunabhängig ab. Somit kann die beschriebene Regelvorrichtung zwei oder mehrere Asynchronmotoren sowohl gleichläufig als auch gegenläufig auf konstante Drehzahl regeln. Selbstverständlich ist es aber auch möglich, Sensoren zu verwenden, die lediglich bei einer von zwei möglichen Drehrichtungen Impulse abgeben. Dann kann der zugehörige Motor auch nur in der entsprechenden Richtung geregelt werden.

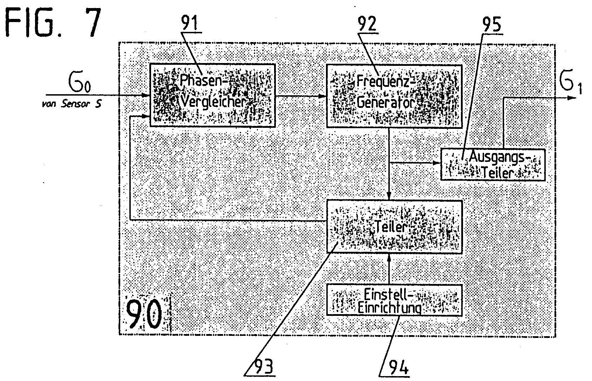

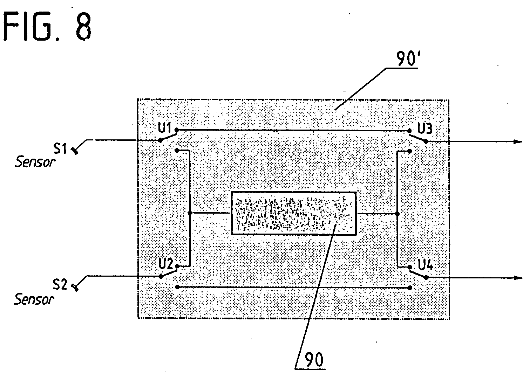

Bezugnehmend auf Figuren 7 und 8 werden nun weitere erfindungsgemäße Ausführungsformen beschrieben. Diese ermöglichen es, zwei oder mehrere Motoren nicht nur mit Drehzahlunterschied gleich Null zu betreiben. Statt dessen kann eine vorbestimmte Drehzahldifferenz eingestellt werden. Die Figuren 7 und 8 zeigen dabei Ausführungsformen, bei denen je zwei Motoren geregelt werden. In ähnlicher Weise zu den Ausführungsformen der Figuren 1 und 6 ist es jedoch auch möglich, das Verfahren bzw. die Vorrichtung bei der Regelung von drei und mehr Motoren anzuwenden.

Figur 7 zeigt als Blockschaltbild eine Baugruppe 90, die in einen Signalpfad zwischen einem der Sensoren S und der zugehörigen asynchron arbeitenden Impulserfassungsschaltung, beispielsweise 11, einzufügen ist. Bezugszeichen $\delta_0$ bezeichnet die Impulsfolge, die unmittelbar vom Sensor S stammt und die in die Schaltung 90 eingegeben wird, Bezugszeichen $\delta_1$ die Impulsfolge, die an die Impulserfassungsschaltung 11 weiterzugeben ist. Bezugszeichen $\delta_i$ bezeichnet eine interne Impulsfolge. Bezugszeichen 94 symbolisiert eine Einheit, mittels derer manuell oder auch automatisch nach Maßgabe beispielsweise eines Prozeßrechners Werte in die Schaltung eingegeben werden können.

9

Prinzipiell hat dabei die Schaltung 90 die Aufgabe, die Frequenz der Ausgangsimpulsfolge $\delta_1$ proportional zur Frequenz der Eingangsimpulsfolge $\delta_0$ nach Maßgabe einer Konstante, die über die Einheit 94 eingegeben wurde, zu verändern. Die Weiterverarbeitung der ausgegebenen Signalfolge $\delta_1$ erfolgt dann, wie bezugnehmend auf Figuren 1 bis 6 beschrieben.

Es sei nun als Beispiel angenommen, daß die Schaltung 90 in den Signalpfad in Figur 2 zwischenSensor S1 und Impulserfassungsschaltung 11 eingebaut sei und daß sich zunächst beide Motoren M1, M2 gleich schnell drehen, so daß die Sensoren S1, S2 jeweils Impulsfolgen von 100 Hz Grundfrequenz erzeugen. Die durch den Sensor S2 des Motors M2 erzeugte Impulsfolge wird unverändert in die Impulserfassungsschaltung 12 eingegeben, wie in Fig. 2 dargestellt. Die Ausgangsimpulsfolge des Sensors S1 dagegen bildet die Eingangssignalfolge $\delta_0$ für die Schaltung 90 der Figur 7. Es sei nun angenommen, daß die Schaltung dementsprechend eine Ausgangssignalfolge $\delta_1$ einer Grundfrequenz von 95 Hz erzeuge und diese in die Impulserfassungsschaltung 11 eingebe. Die gesamte Signalverarbeitungsschaltung "sieht" somit einen langsameren Motor M1 als er in Wirklichkeit vorhanden ist. Die Schaltung kommt dann zu dem "bewußt falschen" Ergebnis, daß Motor M2 vorauseilt und daß dieser somit zu bremsen sei. Dies wird dann entsprechend durchgeführt. Die Herabsetzung der Impulsfrequenz des ersten Motors M1 führt somit zu einer Abbremsung des zweiten Motors. Nimmt man dagegen ein Beispiel an, bei dem die gleichen Ausgangsbedingungen vorliegen, wie weiter oben genannt, bei dem aber die Schaltung 90 aus einer Eingangsgrundfrequenz von 100 Hz eine Ausgangsgrundfrequenz von 105 Hz erzeugt, so "sieht" die angeschlossene Signalverarbeitungsschaltung einen schnelleren Motor M1 als er tatsächlich vorhanden ist. Sie kommt daher zu dem "bewußt falschen" Eindruck, daß Motor M1 vorauseilt und wird diesen dementsprechend abbremsen. Die Erhöhung der Impulsfrequenz für den Motor M1 führt somit dazu, daß dieser durch die Regelungsschaltung entsprechend abgebremst wird.

Im folgenden wird die prinzipielle Funktionsweise der Schaltung 90 bezugnehmend auf Figur 7 beschrieben, Es bezeichnen Bezugsziffer 91 einen Phasenvergleicher, 92 einen steuerbaren Frequenzgenerator, 93 einen Zähler mit einstellbarem Rücksetzzählerstand, 94 die schon genannte Einstellvorrichtung und 95 einen Ausgangsteiler mit einem bestimmten Teilungsverhältnis. Der Phasenvergleicher 91 hat zumindest zwei Eingänge. Am einen liegt das intern erzeugte Signale $\delta_i$ an, am anderen das vom Sensor S stammende Signal $\delta_0$. Im eingeregelten Zustand haben beide Signalfolgen $\delta_0$ und $\delta_i$ die gleiche Grundfrequenz. Der Phasenvergleicher 91 vergleicht die Phasenlage der beiden Signale und erzeugt an seinem Ausgang ein elektrisches Signal, das von seiner Größe her im vorkommenden Arbeitsbereich umkehrbar eindeutig dem ermittelten Phasenunterschied zugeordnet werden kann. Vorzugsweise ist das elektrische Signal eine Spannung, die linear mit dem ermittelten Phasenunterschied verknüpft ist. Die eingegebenen Signale $\delta_i$ und $\delta_0$ können beispielsweise Analogsignale sein, deren Phasenlage relativ zueinander anhand von Nulldurchgängen ermittelt wird. Es ist aber auch möglich, die Phasenverschiebung für digitale Signale anhand der Flanken der Signale zu ermitteln. Sollte $\delta_0$ kein digitales Signal sein, so ist am Eingang des Phasenvergleichers 91 noch ein entsprechender Trigger vorzusehen.

Der steuerbare Frequenzgenerator 92 empfängt an seinem. Eingang die durch den Phasenvergleicher 91 erzeugte Spannung und erzeugt ein Ausgangssignal einer Frequenz, die in umkehrbar eindeutiger Beziehung zur Eingarigsspannung steht. Diese Frequenz ist vorzugsweise wesentlich höher als die Grundfrequenz der Eingangssignalfolge $\delta_0$. Dieses Signal kann eine analoges oder digitales Signal sein, ist ersteres der Fall, ist am Eingang der nachfolgenden Schaltungen 93 bzw. 95 jeweils ein entsprechender Trigger vorzusehen.

Die Schaltung 93 ist ein Zähler mit einstellbarem Rücksetzzählerstand. Letztendlich dient sie als einstellbarer Frequenzteiler. Der Rücksetzzählerstand kann über die Einheit 94 eingegeben werden. Innerhalb eines jeden Zählzyklus (0 bis Rücksetzzählerstand) erzeugt die Zählschaltung 93 einen Impuls. Die Abfolge dieser Impulse bildet die interne Signalfolge $\delta_i$. Das Teilerverhältnis bzw. der Rücksetzzählerstand wird über die Einheit 94 eingegeben.

Der Ausgangsteiler 95 ist ähnlich dem Teiler 93 aufgebaut. Sein Teilungsverhältnis wird jedoch nicht für die Motorregelung geändert, sondern es wird nach Maßgabe der Systemgegebenheiten eingestellt und bleibt in der Regel unverändert.

Bezugnehmend auf ein konkretes Zahlenbeispiel wird nun die Funktionsweise der Schaltung beschrieben. Es sei angenommen, daß im abgeglichenen Zustand (Phasenverschiebung zwischen $\delta_0$ und $\delta_i$ gleich Null) die Schaltung 92 ein Digitalsignal ausgebe, dessen Frequenz 1000 mal so groß ist wie die der eingegebenen Signalfolge $\delta_0$. Der Teilungsfaktor des Ausgangsteilers 95 sei ebenfalls 1000. Als Rücksetzzählerstand für den Zähler 93 sei mittels der Einrichtung 94 ein Zählerstand von 997 eingestellt. Es wird außerdem angenommen, daß der Zähler 93 beim Auftreten einer steigenden Flanke der Eingangssignalfolge $\delta_0$ am Phasenvergleicher 91 anfängt zu zählen und daß er mit dem Rücksetzen die steigende Flanke eines kurzen Ausgangsimpulses abgibt. Im abgeglichenen Zustand wird dann zunächst der Frequenzgenerator 92 eine Frequenz erzeugen, die 1000 mal höher ist als die Grundfrequenz der Signalfolge $\delta_0$. Nach 997 Impulsen wird der Zähler 93 zurückgesetzt und gibt gleichzeitig hierzu eine steigende Flanke eines Impulses der Impulsfolge $\delta_i$ aus. Diese zuletzt genannte Signalflanke tritt also vor der nächstfolgenden steigenden Flanke der Signalfolge $\delta_0$ auf. Somit ergibt sich eine Phasenverschiebung. Dementsprechend erzeugt der Phasenvergleicher 91 eine Spannung an seinem Ausgang. Diese wiederum verändert die Ausgangsfrequenz des Frequenzgenerators 92 in der Weise, daß sie leicht absinkt. Dies führt dann wiederum dazu, daß der nächstfolgende Rücksetzzählerstand 997 später erreicht wird, so daß auch die Phasenverschiebung kleiner wird. Bei geeigneter Wahl der Systemparameter wird sich im stationären Zustand eine feste Phasenverschiebung zwischen den ansteigenden Flanken der Impulse der Signalfolge $\delta_0$ bzw. der Impulse der Signalfolge $\delta_i$ einstellen. Außerdem werden im obigen Beispiel für jeden Impuls der Eingangssignalfolge $\delta_0$ 997 Impulse durch den Frequenzgenerator 92 erzeugt. Der Ausgangsteiler 95 zählt diese Impulse und erzeugt für jeden tausendsten Impuls seinerseits einen Rücksetzimpuls, der als Ausgangssignalfolge $\delta_1$ an die Impulserfassungsschaltung weitergeleitet wird. Somit ergibt sich, daß die Periodendauer der Ausgangssignalfolge $\delta_1$ ca. 3 Promille höher liegt als die Periodendauer der Eingangssignalfolge $\delta_0$. Reziprok hierzu liegt die Grundfrequenz der Ausgangssignalfolge $\delta_1$ um ca. 3 Promille unter der Grundfrequenz der Eingangssignalfolge $\delta_0$.

Ist andererseits durch die Einrichtung 94 ein Rücksetzzählerstand von beispielsweise 1004 eingestellt, so wird zu Beginn die ansteigende Flanke des Rücksetzsignals für den Teiler 93 etwas später als die nächstfolgende Flanke eines Impulses der Eingangssignalfolge $\delta_0$ auftreten. Dadurch ergibt sich eine Phasenverschiebung in der anderen Richtung zwischen Eingangssignalfolge $\delta_0$ und interner Signalfolge $\delta_i$. Dementsprechend wird der Frequenzgenerator 92 veranlaßt, schneller zu zählen, so daß die nächstfolgenden Flanken des Signals $\delta_i$ früher auftreten. Auch hier stellt sich bei geeigneter Parameterwahl ein Gleichgewicht ein, bei dem dann während eines Impulses der Eingangssignalfolge 1004 Impulse durch den Frequenzgenerator 92 erzeugt werden. Der Ausgangsteiler 95 erzeugt abermals alle 1000 Impulse einen Ausgangsimpuls. Somit ergibt sich, daß die Periodendauer der Ausgangssignalfolge verkürzt bzw. deren Frequenz erhöht ist.

Die Schaltung gemäß Fig. 7 arbeitet somit ähnlich dem Prinzip eines Phasenregelkreises bzw. eines PLL (phase locked loop). Bezeichnet man den (einstellbaren bzw. variablen) Rücksetzzählerstand des Zählers 93 als $z_v$ und den (normalerweise unveränderlichen) Rücksetzzählerstand des Ausgangsteilers 95 als $z_1$, so ergibt als Frequenzverhältnis zwischen Eingangsimpulsfolge $\delta_0$ und Ausgangsimpulsfolge $\delta_1$:

$$\frac{f\delta_1}{f\delta_0} = \frac{T\delta_0}{T\delta_1} = \frac{T\delta_i}{T\delta_1} = \frac{z_v}{z_1}, \quad \text{also } f\delta_1 = f\delta_0 \frac{z_v}{z_1}$$

wobei

$z_v$     Zählbereich des einstellbaren PLL-Multiplizierers,

$z_1$     Zählbereich des festen Ausgangsteilers,

$\delta_0$     Eingangsimpulsfolge,

$\delta_1$     Ausgangsimpulsfolge,

$\delta_i$     intern erzeugte Impulsfolge,

$T_\delta$     Periodendauer der jeweiligen Impulsfolge.

Aus der oben wiedergegebenen Formel lassen sich dann auch Dimensionierungsvorschriften für die Systemauslegung ablesen. Grundsätzlich gilt, daß die Frequenzauflösung umso besser ist, je höher die durch den Frequenzgenerator 92 erzeugte Frequenz ist. Soll beispielsweise der Drehzahlunterschied in Stufungen von 0,1 % der Solldrehzahl eingestellt werden, so ist es notwendig, daß pro Impuls der Eingangssignalfolge $\delta_0$ 1000 Impulse durch den Frequenzgenerator 92 erzeugt werden. Soll weiterhin der Frequenzunterschied bis zu -10 % der Nenndrehzahl sein, so muß für den Zähler 93 ein Rücksetzzählerstand zwischen 900 und 1000 einstellbar sein. Bei dem erwähnten Motor mit einer Solldrehzahl von 1450 $\text{min}^{-1}$ bedeutet eine Schrittweite von 0,1 % somit einen Drehzahlunterschied von 1,45 $\text{min}^{-1}$ pro Stufe. Beim kleinstmöglich einstellbaren Drehzahlunterschied läuft somit der schnellere Motor pro Minute ca. 1 1/2 Umdrehungen weiter als der langsamere.

Die Einstelleinrichtung 94 kann beispielsweise ein Potentiometer sein, das über einen Analog/Digitalwandler entsprechende Digitalwerte erzeugt. Genausogut ist es möglich über Tastaturen oder Dezimalschalter entsprechende Rücksetzwerte einzugeben. Genausogut kann der Rücksetzwert aber auch durch einen Prozessrechner eingespeichert und eingestellt werden. Der Rücksetzzählerstand kann auch durch ein übergeordnetes Regelungssystem vorgegeben werden. Im eingangs erwähnten Beispiel des Transports von Tüchern über Rollen kann er beispielsweise nach Maßgabe der Tuchspannung zwischen zwei Rollen oder nach Maßgabe des Durchhangs des Tuches gesetzt werden.

Figur 8 zeigt eine weitere erfindungsgemäße Ausführungsform. Dargestellt ist wiederum nur die Anwendung auf ein System mit zwei Motoren. Es sind dabei lediglich die beiden Signalleitungen, die von den Sensoren S1, S2 stammen und die zu den Impulserfassungsschaltungen 11, 12 führen, angedeutet. Beide Leitungen durchlaufen eine Schaltung 90', innerhalb derer sie entweder direkt durchverbunden werden können oder innerhalb derer sie die Schaltung 90 durchlaufen. Das gewünschte Verhalten wird durch die Schalter U1 bis U4 eingestellt. Werden beide Impulsfolgen direkt durchgestellt, wird keine der Impulsfolgen modifiziert, so daß eine Regelung auf Drehzahlunterschied Null erfolgt. Wird dagegen eine der beiden Leitungen mit der Schaltung 90 verbunden, so wird deren Impulsfolge modifiziert wie oben beschrieben und es erfolgt je nach Einstellung eine Regelung auf einen Drehzahlunterschied ungleich Null. Die oberen bzw. unteren Schalter werden jeweils paarweise umgeschaltet. Eine Schalterstellung, bei der beide Impulsfolgen über die gleiche Schaltung 90 laufen, ist technisch sinnlos und daher zu vermeiden.

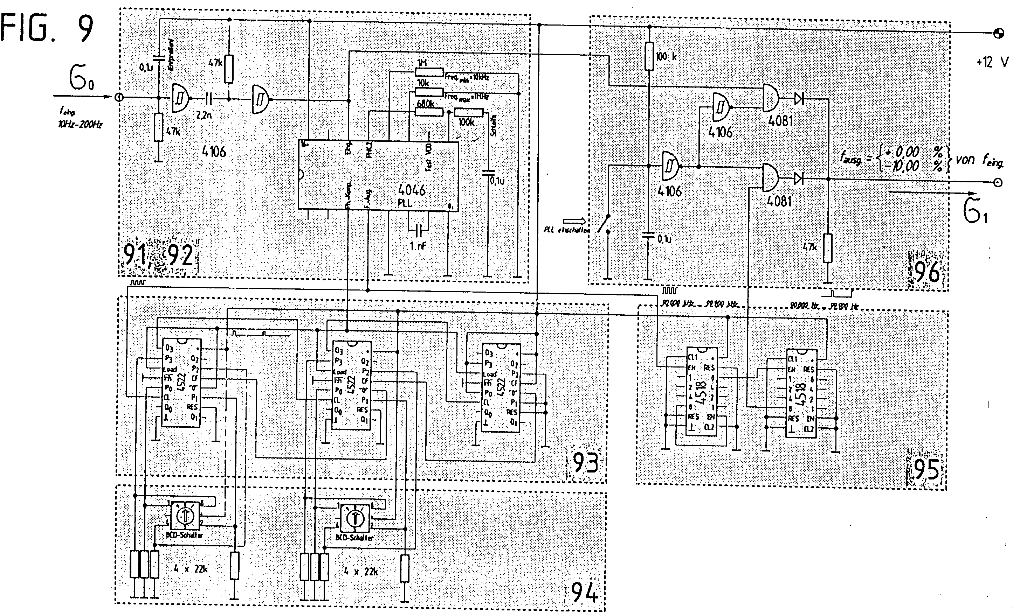

Figur 9 zeigt ein konkretes Schaltungsbeispiel für die bisher beschriebene Schaltung 90. Der Baustein 4046 bildet den Kern des Phasenvergleichers 91 und des Frequenzgenerators 92. Die einlaufende Signalfolge $\delta_0$ wird noch über zwei Trigger 4106 in digitale Form gebracht. Der Frequenzteiler 93 besteht aus einem Rückwärtszähler. Drei Dezimalzähler 4522 sind kaskadenartig verschaltet und empfangen die vom Baustein 4046 erzeugte vergleichsweise hohe Frequenz als deren Taktfrequenz. Diese Zählergruppe zählt von einem einstellbaren Zählerstand aus rückwärts, erzeugt dann einen Reset-Impuls, woraufhin der Anfangszählerstand erneut eingestellt wird, und das Rückwärtszählen beginnt von neuem. In der vorliegenden Schaltung ist ein Beispiel gezeigt, bei dem der Ausgangszählerstand durch BCD-Schalter eingestellt werden kann. Dabei ist lediglich die Einer- bzw. die Zehnerstelle variabel schaltbar, die Hunderterstelle ist fest auf den Wert 9 gelegt, so daß Zählerstände zwischen 900 und 999 eingestellt werden können. Der Reset-Impuls dient dann auch als die intern erzeugte Signalfolge $\delta_i$, die wiederum dem Baustein 4046 zugeführt wird. Die erzeugte vergleichsweise hohe Frequenz wird außerdem dem Ausgangsteiler 95 zugeführt. Er ist durch zwei Bausteine 4518 gebildet. Jeder dieser Bausteine beinhaltet zwei Dezimalzähler. Drei von diesen sind so verschaltet, daß sie einen Frequenzteiler mit dem Teilungsfaktor 1000 bilden. Dem Ausgangsteiler 95 kann dann die endgültige Ausgangssignalfolge $\delta_1$ entnommen werden. Mittels eines Schalters und zugehörigen Schaltbausteins 96 ist es möglich, die gesamte Schaltung 90 wirksam oder unwirksam zu schalten.

Im vorliegenden Fall ist der Einstellbereich also zwischen 900 und 999 begrenzt. Dies heißt, daß ein Drehzahlunterschied von -0,1 % bis -10 % der Nenndrehzahl eingestellt werden kann. Theoretisch sind auch höhere Beträge möglich.

Dann könnte in der vorliegenden Schaltung auch die Hunderterstelle noch mittels eines BCD-Schalters eingestellt werden. Dann wird der zugehörige Motor jedoch weit ausserhalb seines optimalen Arbeitspunktes betrieben. Eine hohe Schaltfrequenz und unter Umständen unrundes Laufen des Motors können die Folge sein.

Die soeben beschriebene Schaltung 90 kann auch in Regelvorrichtungen zum Einsatz kommen, die mehr als zwei Motoren regeln. Beispielsweise kann in Fig. 6A und 6B jede der von den Sensoren S1 bis S5 ausgegebenen Impulsfolgen eine Schaltung gemäß Fig. 7 durchlaufen. Es kann auch bespielsweise die Schaltung nach Fig. 8 so aufgebaut sein, daß sie von drei oder mehr Impulsfolgen durchlaufen wird und daß sie eine oder mehrere der Schaltungen 90 enthält. Durch geeignetes Zuschalten bzw. Abschalten kann dann das gewünschte Regelverhalten eingestellt werden.

Die erfindungsgemäße Schaltung hat somit folgende Vorteile:

- Marktübliche und kostengünstige Asynchronmotoren können verwendet werden;
- die zusätzlichen Aufwendungen für die Überwachungsschaltung liegen weit unter den Kosten zweier Synchronmotoren, der elektrischen Welle oder gar denen eines Frequenzumrichters;
- vorhandene Anlagen können leicht nachgerüstet werden;
- die zusätzliche Elektronik benötigt nur wenig Platz;
- es gibt auch beim Anlaufen keine asynchrone Phase, im Gegensatz zu Synchronmotoren;
- bleibt beim Ausschalten der Motoren die elektronische Überwachung in Betrieb, so erfaßt sie auch die eventuell beim Auslaufen der Motoren entstehende Impulsdifferenz. Beim nächsten Start der Motoren wird diese ausgeglichen, so daß, im Mittel gesehen, eine Drehzahldifferenz überhaupt nicht auftritt;
- durch zusätzliches Überwachen der Impulsabstände kann auch eine Überlastung oder Blockade eines bzw. beider Motoren erkannt werden,

12

- das typische Verhalten von Asynchronmotoren: Anlaufmoment, Sattelmoment und Kippmoment bleibt grundsätzlich erhalten,
- die Drehrichtung der Motoren kann nach Belieben gleichsinnig oder gegenläufig sein,
- die Leistungsklassen der Motoren können verschieden sein, und
- die Sensoren zur Bestimmung der Drehzahl können grundsätzlich auch an anderen Stellen als am Motor selbst angebracht werden.

Für die korrekte Wirkungsweise der Schaltung kann eine Synchronisierung der Motoren ebenso durch Messen z.B. eines zurückgelegten Weges oder auch durch Bestimmung der Drehzahl oder sonstiger von der Drehzahl abhängiger Größen eines von den Motoren angetriebenen Aggregats vorgenommen werden. Mögliche Störgrößen werden dann gleich mit erfaßt und ausgeregelt. Werden beispielsweise die linken und rechten Räder eines Schienenfahrzeugs oder einer Laufkatze eines Krans in einer Fabrikhalle durch verschiedene Motoren angetrieben, so können linke und rechte Räder unterschiedlichen Schlupf haben. Wird dann die links und rechts zurückgelegte Entfernung in eine jeweilige Impulsfolge umgewandelt, wird der unterschiedliche Schlupf ausgeregelt. Bei kurvigen Schienenwegen können die jeweiligen Impulsfolgen des linken und rechten Motors außerdem beispielsweise so erzeugt werden, daß sie für den zurückgelegten Kurvenwinkel und nicht für die zurückgelegte Entfernung gleich sind. Dadurch würde bei gleicher Bahngeschwindigkeit auf der Außen- bzw. Innenkurve für die Innenkurve eine höherfrequente Impulsfolge erzeugt werden, was zum Abbremsen des Motors auf der Innenkurve führt. Es ist somit also möglich, ein System mehrerer Motoren auf konstante Winkelgeschwindigkeit zu regeln.

Die vorliegende Erfindung wurde bisher anhand von Blockdiagrammen und Schaltbildern dargestellt. Das diesen Schaltungen zugrunde liegende Regelungsverfahren ist aber selbstverständlich ebenso als zur Erfindung gehörig anzusehen.

Die beschriebene Schaltung kann aus handelsüblichen, insbesondere integrierten Bauelementen aufgebaut sein. Es ist aber auch möglich, eine entsprechende Regelung ganz oder teilweise durch einen geeigneten programmierten Prozeßrechner oder Mikrocomputer zu implementieren.

**Patentansprüche**

1. Regelungsverfahren für zumindest zwei Asynchronmotoren, die mit einem definierten Soll-Drehzahlunterschied betrieben werden sollen,
   gekennzeichnet durch die folgenden Schritte:
   - für jeden der Motoren Erzeugen einer Impulsfolge nach Maßgabe entweder des zunehmenden Drehwinkels des entsprechenden Motors oder nach Maßgabe einer anderen Größe, die sich aufgrund der Motordrehung des betreffenden Motors verändert,
   - Ermitteln der Differenz der Impulszahlen der Impulsfolgen der einzelnen Motoren, und
   - falls nötig, zeitweises Abschalten einer oder mehrerer Phasen eines voreilenden Motors, wenn die ermittelte Differenz einen Grenzwert übersteigt, um die ermittelte Differenz auf eine Solldifferenz einzustellen.

2. Verfahren nach Anspruch 1, dadurch gekennzeichnet, daß zwei Motoren geregelt werden.

3. Verfahren nach Anspruch 1 oder 2, dadurch gekennzeichnet, daß der Soll-Drehzahlunterschied 0 ist.

4. Verfahren nach Anspruch 1 oder 2, dadurch gekennzeichnet, daß der Soll-Drehzahlunterschied ungleich 0 ist und daß die Differenz der Impulszahlen innerhalb einer bestimmten Torzeit ermittelt wird.

5. Verfahren nach einem der Ansprüche 1-4, dadurch gekennzeichnet, daß für jeden der Motoren die gleiche Impulszahl pro Umdrehung abgegeben wird.

6. Verfahren nach einem der Ansprüche 1-5, dadurch gekennzeichnet, daß die Differenz der Impulszahlen der Impulsfolgen der einzelnen Motoren auch dann ermittelt wird, wenn die Motoren selbst abgeschaltet werden und daß die weiterhin ermittelte Differenz beim erneuten Anschalten der Motoren für die weitere Regelung der Motoren verwendet wird.

7. Verfahren nach Anspruch 3, dadurch gekennzeichnet, daß die Differenz der Impulszahlen nach Betrag und Vorzeichen bestimmt wird.

EP 0 567 781 A2

**8.** Verfahren nach Anspruch 7, dadurch gekennzeichnet, daß dann, wenn der Betrag der Differenz einen ersten Schwellwert überschreitet, eine Phase des voreilenden Motors vom Netz abgetrennt wird.

**9.** Verfahren nach Anspruch 8, dadurch gekennzeichnet, daß dann, wenn der Betrag der Differenz einen zweiten Schwellwert überschreitet, zwei Phasen des Asynchronmotors vom Netz abgeklemmt werden, wobei der zweite Schwellwert größer als der erste Schwellwert ist.

**10.** Verfahren nach Anspruch 8 oder 9, dadurch gekennzeichnet, daß dann, wenn der Betrag der Differenz einen dritten Schwellwert überschreitet, ein Alarm ausgelöst wird, wobei der dritte Schwellwert größer als der erste Schwellwert und ggf. auch größer als der zweite Schwellwert ist.

**11.** Verfahren nach einem der Ansprüche 1-10, dadurch gekennzeichnet, daß es ganz oder teilweise durch einen Prozeßrechner implementiert wird.

**12.** Verfahren nach einem der Ansprüche 1 bis 11, gekennzeichnet durch den Schritt des Modifizierens einer oder mehrerer der erzeugten Impulsfolgen derart, daß die Frequenz einer modifizierten Impulsfolge ungleich der Frequenz der zugehörigen erzeugten Impulsfolge ist, wobei jedoch nach Maßgabe eines vorgebbaren Wertes die beiden Frequenzen proportional zueinander sind.

**13.** Verfahren nach Anspruch 12, dadurch gekennzeichnet, daß die Impulsfolgefrequenz der modifizierten Impulsfolge in einem Bereich zwischen 90 % und 100 % der Impulsfolgefrequenz der erzeugten Impulsfolge liegt.

**14.** Verfahren nach Anspruch 12 oder 13, dadurch gekennzeichnet, daß der vorgebbare Wert manuell und/oder durch eine elektronische Prozeßsteuerung vorgegeben wird.

**15.** Verfahren nach einem der Ansprüche 12 bis 14, dadurch gekennzeichnet, daß der Frequenzunterschied zwischen den Frequenzen der erzeugten Impulsfolge und der modifizierten Impulsfolge in diskreten Schritten eingestellt werden kann.

**16.** Verfahren nach einem der Ansprüche 1 oder 12 - 15, dadurch gekennzeichnet, daß
- die niederfrequenteste der erzeugten bzw. modifizierten Impulsfolgen ermittelt wird,
- für jede erzeugte bzw. modifizierte Impulsfolge die Differenz der Impulszahlen im Vergleich zur Impulszahl der ermittelten niederfrequentesten Impulsfolge ermittelt wird, und
- eine oder mehrere Phasen der voreilenden Motoren nach Maßgabe der ermittelten Differenz abgeschaltet werden.

**17.** Verfahren nach Anspruch 16, dadurch gekennzeichnet, daß die niederfrequenteste Impulsfolge dadurch ermittelt wird, daß die jeweils ermittelten Impulsdifferenzen oder die hieraus abgeleiteten Steuerungsmaßnahmen überwacht und ausgewertet werden.

**18.** Regelungsvorrichtung für zumindest zwei Asynchronmotoren (M1, M2, M3 ... Mn), die mit einem definierten Soll-Drehzahlunterschied betrieben werden sollen, insbesondere zur Durchführung des Regelungsverfahrens nach einem der Ansprüche 1-17, gekennzeichnet durch
- einen Sensor (S1, S2, S3 ... Sn) für jeden der Motoren (M1, M2, M3 ... Mn), wobei jeder der Sensoren eine Impulsfolge entweder nach Maßgabe des zunehmenden Drehwinkels des entsprechenden Motors oder nach Maßgabe einer anderen Größe, die sich aufgrund der Motordrehung des betreffenden Motors ändert, erzeugt,
- Einrichtungen (1-63) zum Ermitteln der Differenz der Impulszahlen der durch die jeweiligen Sensoren (S1, S2, S3 ... Sn) erzeugten Impulsfolgen, und
- Einrichtungen (70-82), die zeitweise eine oder mehrere Phasen (u, v, w) eines voreilenden Motors vom Netz abschalten, wenn die ermittelte Differenz einen Grenzwert übersteigt, um die ermittelte Differenz auf eine Soll-Differenz einzustellen.

**19.** Vorrichtung nach Anspruch 18, dadurch gekennzeichnet, daß die Asynchronmotoren (M1, M2, M3 ... Mn) dreiphasige Asynchronmotoren sind.

14

20. Vorrichtung nach Anspruch 18 oder 19, dadurch gekennzeichnet, daß sie zwei Asynchronmotoren regelt.

21. Vorrichtung nach einem der Ansprüche 18-20, dadurch gekennzeichnet, daß sie den Drehzahlunterschied auf 0 regelt.

22. Vorrichtung nach einem der Ansprüche 18-21, dadurch gekennzeichnet, daß alle Sensoren (S1 bis Sn) die gleiche Anzahl von Impulsen pro Motorumdrehung erzeugen.

23. Vorrichtung nach einem der Ansprüche 18-22, dadurch gekennzeichnet, daß die Ermittlungseinrichtungen (1-63) für jede der einlaufenden Impulsfolgen Impulserfassungsschaltungen (11, 12) aufweisen, die die eingespeicherten Impulse jeweils unsynchronisiert einspeichern, sowie Impulsübergabeschaltungen (21, 22), die die jeweils in den Impulserfassungsschaltungen (11, 12) eingelaufenen Impulse einer synchronisierten Weiterverarbeitung zuführen.

24. Vorrichtung nach Anspruch 20, 21 und 22, dadurch gekennzeichnet, daß die Differenz durch eine Zählschaltung (50, 60) ermittelt wird.

25. Vorrichtung nach Anspruch 24, dadurch gekennzeichnet, daß die Zählschaltung (50, 60) ein digitaler Zähler ist, der so geschaltet ist, daß er die Impulsdifferenz nach Betrag und Vorzeichen ermittelt.

26. Vorrichtung nach einem der Ansprüche 18-25, dadurch gekennzeichnet, daß für jeden der Motoren (M1 bis Mn) eine Motorsteuerschaltung (81, 82) vorgesehen ist, die nach Maßgabe der Impulsdifferenz eine oder mehrere Phasen (u, v, w) eines vorauseilenden Motors vom Netz zeitweise abschalten kann.

27. Vorrichtung nach einem der Ansprüche 18-26, gekennzeichnet durch eine oder mehrere Schaltungen (90), die jeweils zwischen den Ausgang eines Sensors (S1, S2, S3 ... Sn) und den entsprechenden Eingang der Differenzermittlungseinrichtung (1-63) geschaltet sind, wobei jede der Schaltungen (90) die durch den jeweils zugehörigen Sensor (S1, S2, S3,...Sn) erzeugte Impulsfolge derart modifizieren kann, daß die Frequenz der modifizierten Impulsfolge ungleich der Frequenz der zugehörigen erzeugten Impulsfolge ist, wobei jedoch nach Maßgabe eines vorgebbaren Wertes die beiden Frequenzen proportional zueinander sind.

28. Vorrichtung nach Anspruch 27, dadurch gekennzeichnet, daß die Schaltung (90) einen Phasenregelkreis aufweist.

29. Vorrichtung nach einem der Ansprüche 27 oder 28, gekennzeichnet durch eine Schaltung (90'), mittels derer wahlweise eine der durch die verschiedenen Sensoren (S1, S2, S3, ... Sn) erzeugten Impulsfolgen durch die Modifikationsschaltung (90) geführt werden kann, wobei die anderen Impulsfolgen durchverbunden werden.

30. Vorrichtung nach einem der Ansprüche 27 bis 29, dadurch gekennzeichnet, daß der vorgegebene Wert über eine analoge oder digitale Einstelleinrichtung (94) oder über die Schnittstelle von einem Prozeßleitsystem her eingegeben wird.

31. Vorrichtung nach einem der Ansprüche 18, 19, 27 bis 30, gekennzeichnet durch
    - Ermittlungseinrichtungen (DS1, DS2, 5, 6), die aus den erzeugten bzw. modifizierten Impulsfolgen die niederfrequenteste ermitteln, und
    - einen Auswahlschalter (AS1), der nach Maßgabe der Entscheidung der Ermittlungseinrichtung (DS1, DS2, 5, 6) die ermittelte niederfrequenteste Impulsfolge als Referenzimpulsfolge zur Steuerung der Motoren ausgibt.

32. Vorrichtung nach einem der Ansprüche 18 bis 31, dadurch gekennzeichnet, daß die Einrichtungen (70-82) zum Abschalten von Phasen (u, v, w) vom Netz Nullspannungsschalter und/oder Phasenanschnittssteuerungen aufweist.

FIG. 1

M₁

S₁

L₁
L₂
L₃

M₂

S₂

L₁
L₂
L₃

Motor-
Steuerschaltung

1

M₃

S₃

L₁
L₂
L₃

Mₙ

Sₙ

EP 0 567 781 A2

# FIG. 2

EP 0 567 781 A2

FIG. 3

FIG. 4

EP 0 567 781 A2

**FIG. 5**

| EINGANGSPARAMETER | | | ERGEBNISSE | |
|---|---|---|---|---|
| Zähler | Vorzeichen | Impuls-Vorzchn. | Vorzeichen | Zählrichtung |
| 4-fach NOR | ALT | Add. / Subtr. | NEU | des Diff.-Zählers |
| NOR=0 →1 | + = 1 | Addition.. = 1 | + = 1 | Aufwärts = 1 |
| NOR=1 →0 | - = 0 | Subtraktion = 0 | - = 0 | Abwärts = 0 |
| 0 | 0 | 0 | 0 ⊤ | 1 ⊤ |
| 0 | 0 | 1 | 0 Vorzchn. | 0 EX-NOR |
| 0 | 1 | 0 | 1 bleibt | 0 |
| 0 | 1 | 1 | 1 ⊥ | 1 ⊥ |
| 1 | 0 | 0 | 0 | 1 ⊤ |
| 1 | 0 | 1 | 1 Vorzchn. | 1 Nur |
| 1 | 1 | 0 | 0 wechselt | 1 aufwärts |
| 1 | 1 | 1 | 1 | 1 ⊥ |

FIG. 6A

FIG. 6B

FIG. 7

**91** Phasen-Vergleicher

**92** Frequenz-Generator

**95** Ausgangs-Teiler

**93** Teiler

**94** Einstell-Einrichtung

$G_0$ von Sensor S

$G_1$

90

EP 0 567 781 A2

FIG. 8

FIG. 9

EP 0 567 781 A2